**Europäisches Patentamt**

**European Patent Office**

**Office européen des brevets**

(11) Veröffentlichungsnummer : **0 109 959
B1**

(12) **EUROPÄISCHE PATENTSCHRIFT**

(45) Veröffentlichungstag der Patentschrift :
02.03.88

(21) Anmeldenummer : **83890194.0**

(22) Anmeldetag : **28.10.83**

(51) Int. Cl.⁴ : **G 01 N 21/64, C 09 K 11/06,
C 09 K 11/02**

(54) Sensorelement zur Bestimmung des 02-Gehaltes einer Probe sowie Verfahren zur Herstellung desselben.

(30) Priorität : 23.11.82 AT 4265/82

(43) Veröffentlichungstag der Anmeldung :
30.05.84 Patentblatt 84/22

(45) Bekanntmachung des Hinweises auf die Patenterteilung : 02.03.88 Patentblatt 88/09

(84) Benannte Vertragsstaaten :
DE FR GB

(56) Entgegenhaltungen :
EP-A- 0 105 870
GB-A- 2 085 465
US-A- 3 427 273
CHEMICAL ABSTRACTS, Band 101, Nr. 24, 10. Dezember 1984, Columbus, Ohio, USA; TORAY INDUSTRIES
"Concentration detector for paramagnetic gas",
Seite 670, Spalte 2, Zusammenfassungsnr. 221681d &
JP-A-59-24379 (JPN TOKKYO KOHO) (Anmeldetag 23-
12-1976), Veröffentlichungstag 08-06-1984) (Kat. E)

(73) Patentinhaber : AVL AG
Grabenstrasse 11
CH-8201 Schaffhausen (CH)

(72) Erfinder : Marsoner, Hermann
Jakominiplatz 17
A-8010 Graz (AT)
Erfinder : Kroneis, Herbert
Jakob Gschiel-Gasse 8/21
A-8052 Graz (AT)
Erfinder : Wolfbeis, Otto
Schöckelbachweg 37 b
A-8045 Graz (AT)

(74) Vertreter : Krause, Walter, Dr. Dipl.-Ing.
Postfach 200 Singerstrasse 8
A-1014 Wien (AT)

**Beschreibung**

Die Erfindung betrifft ein Sensorelement zur Bestimmung des $O_2$-Gehaltes einer Probe, mit einem $O_2$-abhängig fluoreszierenden Indikator, der mit der zu messenden Probe zumindest teilweise in Kontakt bringbar ist und nach Anregung Fluoreszenzlicht abgibt, wobei die Indikatorsubstanz zumindest annähernd homogen verteilt in einem Polymerträger eingebaut vorliegt, sowie ein Verfahren zur Herstellung eines derartigen Sensorelementes.

Es ist bekannt, daß molekularer Sauerstoff die Fluoreszenzintensität von einer großen Reihe von organischen Substanzen, zum Beispiel der polyzyklischen aromatischen Kohlenwasserstoffe beeinflußt. Dabei tritt der molekulare Sauerstoff mit dem durch das Anregungslicht angeregten Molekül in Wechselwirkung, nimmt dabei dem im angeregten Zustand befindlichen Molekül Energie ab und reduziert die Intensität des ausgesandten Fluoreszenzlichtes. Es ist weiters bekannt, über den Umweg der Fluoreszenzintensität eines derartigen Indikatorstoffs den Partialdruck des molekularen Sauerstoffs zu messen. Dabei kann z. B. der fluoreszierende Stoff in einem Lösungsmittel gelöst sein. Der Partialdruck des in diesem Lösungsmittel enthaltenen Sauerstoffs bestimmt die Höhe der Fluoreszentintensität.

Bei einem beispielsweise aus der DE-PS 25 08 637 bekannten Sensorelement ist eine dünne Schichte der Indikatorlösung auf einem geeigneten Trägermaterial, das lichtdurchlässig ist, und eine Abdeckung der Lösung des fluoreszierenden Stoffs durch eine für Sauerstoff permeable Membran vorgesehen. An der Trägerseite dieser Anordnung ist eine Beleuchtungs- und Lichtmeßeinrichtung angeordnet. Durch die dünne, für Sauerstoff permeable Membran, ist ein rascher Ausgleich des Sauerstoffpartialdruckes zwischen der fluoreszierenden Schichte und dem angrenzenden Medium außerhalb der Deckmembran möglich. Die fluoreszierende Schichte nimmt dabei durch Diffusion jeweils sehr rasch den Sauerstoffpartialdruck des angrenzenden Mediums an und stellt die Intensität seines Fluoreszenzlichtes darnach ein. Mit einem derartigen Sensorelement ist die Messung von Sauerstoffpartialdruck auch in wäßrigen Medien mit Hilfe optischer Mittel möglich.

Diese Schrift offenbart auch den Gedanken, den Indikatorstoff, also die fluoreszierende Substanz, in eine polymere Folie « leckfrei » einzusiegeln. Es wird jedoch kein Verfahren zur Herstellung von Sensorelementen auf der Basis von Polymerfolien angegeben.

Bevor nun auf die weitere Problematik des Einbaus von Indikatormolekülen in Polymere eingegangen wird, sollen die wesentlichsten aromatischen Kohlenwasserstoffverbindungen genannt werden, die als Indikator bei einem Sensorelement nach der Erfindung in Frage kommen. Von diesen wären vorzugsweise folgende Verbindungen zu nennen :

Carbazol, Acridon, Fluoranthen, 9,10 Diphenylanthracen, Chrysen, Benz(a)anthracen, Tetracen, Pyren, Dibenz(ah)anthracen, Perylen, Benoz(ghi)perylen, Coronen, Anthanthren, Decacyclen, 1 Aminoanthracen, 2 Aminoanthracen, 1 Aminopyren.

Über diese Verbindungen hinaus zeigen sehr viele weitere fluoreszierende Substanzen aus der Gruppe der polyzyklischen, homozyklischen oder heterozyklischen aromatischen Kohlenwasserstoffe Fluoreszenz und/bzw. Fluoreszenzlöschung durch molekularen Sauerstoff.

Um nun eine derartige Indikatorsubstanz in ein Polymer einzubringen, kann man sich mehrerer bekannter Methoden bedienen :

1. Man wählt Indikatorsubstanzen, die in einem Lösungsmittel für das gewählte Polymer selbst löslich sind und bereitet eine gemeinsame Lösung des Indikatorstoffes und des Polymers, woraus durch Verdampfen des gemeinsamen Lösungsmittels der den Indikatorstoff enthaltende Polymer zurückbleibt.

2. Abgesehen von einem gemeinsamen Lösungsmittel kann auch ein Suspensionsmittel für ein Polymer verwendet werden, wenn dieses wiederum als Lösungsmittel für den Indikatorstoff geeignet ist.

3. Wenn die Polymerisation des verwendeten Polymers aus einem Reaktionsgemisch mehrerer Komponenten heraus erfolgt kann eine dieser Komponenten gleichzeitig als Lösungsmittel für den Indikatorstoff herangezogen werden.

Nach dieser einfachen und an sich bekannten Vorgangsweise ergeben sich eine Reihe von Problemen, die dazu führen, daß in Polymere derart eingebaute Indikatormoleküle für den erfindungsgemäßen Zweck nicht geeignet sind. Dies z. B. dadurch, daß durch das Verdampfen des gmeinsamen Lösungsmittels keine molekulare Verteilung des Indikatorstoffs im Polymer entsteht, sondern daß der Indikatorstoff im Polymer auskristallisiert. Der in kristallisierter Form im Polymer vorliegende Indikatorstoff zeigt zwar durchaus Fluoreszenz, jedoch wird diese durch den anwesenden molekularen Sauerstoff nicht oder höchstens in äußerst geringem, praktisch unbrauchbarem Ausmaß beeinflußt.

Außer einer feinen Verteilung von Mikrokristallen im Polymer wurde die Bildung von größeren Aggregaten von kristallinem Indikator im Polymer beobachtet.

Selbst wenn in gewissen Fällen molekulare Verteilung des Indikators im Polymer vorliegt, wie dies beispielsweise mit PVC-Lösungen durchaus erreicht werden kann, zeigt sich, daß die derart eingebauten Indikatoren keine Fluoreszenzlöschung durch molekularen Sauerstoff zeigen.

Aufgabe der Erfindung ist es, ein Sensorelement sowie ein Verfahren der eingangs genannten Art so zu verbessern, daß die genannten Nachteile der bekannten Einrichtungen nicht auftreten und daß insbesondere auf einfache Art die Herstellung eines in einem Polymerträger eingebauten Indikators ermöglicht ist, der eine meßtechnisch auswertbare, ausreichend hohe Fluoreszenz bzw. Fluoreszenzlöschung aufweist.

Dies wird gemäß der Erfindung dadurch erreicht, daß der Träger von einem ausgehärteten Siliconpolymer gebildet ist, in dem die Indikatorsubstanz in solubilisierter Form gebunden vorliegt.

Für die Verwendbarkeit eines Polymerträgers, beispielsweise einer Polymermembran, im Sinne der Erfindung ist ausreichend hohe Sauerstoffpermeabilität des Membranmaterials als wesentliche Voraussetzung anzusehen. Die Empfindlichkeit wird bestimmt durch die Fluoreszenzabklingzeit des verwendeten Indikators und den Sauerstoffpermeabilitätskoeffizienten ($P_{O_2}$) des Polymermaterials.

Mit Ausnahme von Silicon ($P_{O_2} \cong 600.10^{-10} cm^2$ $s^{-1}cmHg^{-1}$, 1 cmHg = 1.33 kPa) sind die Sauerstoffpermeabilitätskoeffizienten üblicherweise zu klein ($P_{O_2} < 35.10^{-10} cm^2$ $s^{-1}cmHg^{-1}$) um meßtechnisch brauchbare Sauerstoffempfindlichkeiten selbst bei Verwendung von Indikatoren mit hohen Fluoreszenzabklingzeiten zu erhalten. Das Ausmaß der Sauerstofflöschung im Sensorelement wird bestimmt durch die Fluoreszenzabklingzeit des Indikators und durch den Sauerstoffpermeabilitätskoeffizienten des Polymermaterials (unter Fluoreszenzabklingzeit versteht man die mittlere Lebenszeit des angeregten Zustandes eines fluoreszierenden Moleküls). Die Verwendung eines schlechter sauerstoffpermeablen Polymers bedingt die Verwendung von Indikatormolekülen mit großen Fluoreszenzabklingzeiten.

Bei Verwendung des am besten sauerstoffpermeablen Polymers — Silicon — können durch den Einsatz von Indikatoren mit relativ kleinen Fluoreszenzabklingzeiten ($\tau^0 > 5$ ns) bereits meßtechnisch verwertbare Fluoreszenzsignalunterschiede in Abhängigkeit vom Sauerstoffpartialdruck beobachtet werden.

Aber auch für den Einbau von Indikatorstoffen in Siliconpolymeren ergab sich, daß die Konzentration der Indikatorstoffe, die durch die oben geschilderten üblichen Verfahren eingebracht werden können, für ausreichende Fluoreszenzsignalhöhe, so daß diese meßtechnisch brauchbar wird, unzureichend gering ist.

Es hat sich jedoch überraschenderweise gezeigt, daß sich die Indikatorsubstanzen chemisch modifizieren, nämlich solubilisieren lassen, so daß ausreichend hohe Konzentrationen der Indikatorsubstanzen in Silicon in Lösung gebracht werden können.

Unter Solubilisierung (« löslich machen ») ist hier zu verstehen, daß die Löslichkeit einer Substanz in einem (auch polymeren) Lösungsmittel durch Modifizierung der Substanz (chemische Modifizierung) erhöht wird.

Die Veränderung an den Indikatorsubstanzen erfolgt im wesentlichen analog der an sich bekannten Friedel Crafts Alkylierung an Aromaten.

Es hat sich damit gezeigt, daß trotz Erhöhung der Löslichkeit des fluoreszierenden Stoffs weitestgehend ungestörtes Löschverhalten vorliegt, wenn die folgenden, an sich bekannten Schritte durchgeführt werden.

1. Indikator und tert. Butylchlorid werden in einem geeigneten Lösungsmittel ($CS_2$) gelöst und unter dem katalytischen Einfluß von Aluminiumchlorid umgesetzt.

2. Nach einem Extraktionsvorgang folgen Wasch- und Trockenprozesse ; — ein Entfernen von überschüssigen organischen Lösungsmitteln durch Rotationsverdampfen führt zu einem ölartigen Rückstand, welcher direkt als « solubilisierter Indikator » eingesetzt werden kann, oder : wie oben, aber der Indikator wird in einem Überschuß von tert. Butylchlorid ohne Zusatz eines weiteren Lösungsmittels gelöst.

Durch diese geschilderten Maßnahmen können nun zu Membranen verarbeitbare Polymer- bzw. Praepolymergemische mit sauerstoffempfindlichen Indikatorsubstanzen hergestellt werden, wobei die Konzentration des Indikators in diesen Gemischen so hoch ist, daß auch in dünner Schicht (z. B. unterhalb von 50 μm Schichtstärke) meßtechnisch ausreichende Signalhöhen erreicht werden können. Die Weiterverarbeitung der Polymergemische erfolgt durch übliche Verfahren zu dünnen Membranen. Diese Verfahren können Ausstreichen, Gießen oder andere Verfahren beinhalten, wie sie zum Beschichten von Oberflächen mit Polymeren angewandt werden. Ein weiterer Vorteil dieser Vorgangsweise ist, daß während des Polymerisationsvorganges eine dünne Membran auf einem festen Trägermaterial in haftender Verbindung aufgebracht werden kann.

Auf Träger fixierte dünne Polymermembranen mit Indikatorsubstanzen der beschriebenen Art konnten zur fluoreszenzphotometrischen Messung von Sauerstoff in Gas angewandt werden. Dabei hat sich als besonderer Vorteil dieser Meßtechnik gezeigt, daß man Einstellzeiten von reinem Stickstoff auf reinen Sauerstoff in der Größenordnung bis zu 0,15 sec. erreichen konnte.

Obwohl allein das Auflösen von Indikatoren im polymeren Trägermaterial häufig ausreicht, um Indikatorverluste an die Umgebung zu verhindern, kann es für verschiedene Anwendungszwecke von Vorteil sein, andere Methoden zur Immobilisierung von Substanzen in Polymeren anzuwenden.

Diese sind z. B.

a) Einschränkung der Indikatorbeweglichkeit im Polymer durch chemische Modifizierung (Alkylierung mit längeren C-Ketten) der Indikatoren

b) Kovalente Bindung der Indikatoren an die Polymersubstanz.

Wie auch elektrochemische Sensoren für die Messung von Gasen, müssen optische Sensoren mit Eichmedien bekannter Gaskonzentration geeicht werden. Wenn nun die Aufgabe besteht, den Sauerstoffpartialdruck in Flüssigkeiten zu messen und weiters nicht davon ausgegangen werden kann, daß das Eichmedium gleiche optische Eigenschaften besitzt wie die Probe, so sind an der Grenzfläche zwischen Membran und Probe opti-

sche Effekte zu erwarten, die das gemessene Fluoreszenzsignal in störender Weise beeinflussen. Dies geschieht vor allem dadurch, daß die Reflexionsbedingungen an der Grenzfläche zwischen Membran und Probe jeweils von den optischen Eigenschaften des Probenmediums abhängen und damit die Rückreflexion des Anregungs- und Fluoreszenzlichtes in die Sensormembran von den optischen Eigenschaften des Probenmediums abhängt. Um diesen unerwünschten Nebeneffekt zu vermeiden, ist es erforderlich, der Grenzfläche zwischen Membran und Probenmedium definierte optische Eigenschaften zu verleihen.

Es ist beispielsweise durch die DE-PS 25 08 637 bekannt, daß die Oberfläche des optischen Sensors der Meßeinrichtung durch Verspiegelung oder Schwärzung in der Weise präpariert werden kann, daß der Einfluß der optischen Eigenschaften des Probenmediums unerheblich ist.

Bei den erfindungsgemäßen Sensorelementen mit erhöhter Indikatorkonzentration erweist sich dies als nachteilig, da eine entsprechend dünne Schwärzungs- oder Versiegelungsschichte leicht von der Oberfläche des indikatorhaltigen Sensors entfernt werden kann aber zu ihrer mechanischen Stabilisierung keine erhebliche Dicke aufweisen darf, da dadurch die Diffusion von Sauerstoff aus dem Probenbereich in den Sensorinnenraum erschwert wird.

Aus diesem Grund hat es sich in Zusammenhang mit der vorliegenden Erfindung als vorteilhaft erwiesen, wenn gemäß einer weiteren Ausgestaltung an der der Probe zugewandten Seite des Polymerträgers eine zusätzliche Polymerschicht mit geringer Lichtdurchlässigkeit, beispielsweise Silicon mit eingelagerten Eisenoxid-Partikeln, aufgebracht ist.

Eine weitere Möglichkeit zur Herstellung der optischen Unabhängigkeit vom Probenmedium ist durch Einlagerung von Pigmenten wie Eisenoxidpartikeln in die indikatorhältige Polymermembran gegeben.

Vorteilhafterweise können diese Partikeln durch Einwirkung äußerer Kraftfelder während des Härtevorganges der Membran in einen oberflächennahen Bereich der Indikatormembran dirigiert werden. (Beispiele für derartige Kraftfelder sind : Gravitationsfeld, elektrisches Feld, Magnetfeld).

Eine weitere Möglichkeit zur Herstellung der optischen Unabhängigkeit vom Probenmedium ist gemäß der Erfindung dadurch gegeben, daß an der der Probe zugewandten Seite des Polymerträgers ein dünnes Maschengitter, insbesonders aus Metall oder Kunststoff, miteinpolymerisiert ist. Als Materialien haben sich dafür z. B. Siebdrucknetze als geeignet erwiesen.

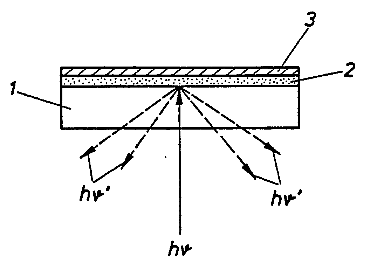

Durch die geschilderten Maßnahmen entsteht ein in Schichten aufgebautes Sensorelement, wie dies die Abbildung zeigt. Die unterste Schicht 1, die einer hier nicht dargestellten Beleuchtungs- und Lichtmeßeinrichtung zugewandt ist und vom Anregungslicht ($h\nu$) durchstrahlt wird, dient als fester Träger (beispielsweise Glas). Die mittlere Schichte 2 ist jene Polymerschichte, die in molekularer Verteilung die fluoreszierende Indikatorsubstanz derart enthält, daß ein vom Sauerstoffgehalt des an das Sensorelement angrenzenden Probenmaterials abhängiges Fluoreszenzsignal ($h\nu'$) meßbar ist. Über der Schichte 2 liegt die dem Probenmaterial zugewandte optische Isolationsschichte 3. Die Schichten 2 und 3 bestehen aus einem für Sauerstoff gut durchlässigen Polymermaterial. Die beiden genannten Schichten sind durch Polymerisation homogen miteinander verbunden.

Auf die Trägerschicht 1 könnte unter Umständen verzichtet werden, wenn entweder keine mechanische Stabilität erforderlich ist, oder die verbleibenden beiden Schichten in einem geeigneten Halter aufgespannt werden. Die Beleuchtungs- und Lichtmeßeinrichtung befindet sich dabei unmittelbar an die Schichte 2 angrenzend.

Beispiele :

a) 0,2 g solubilisiertes (siehe Seite 5, Absatz 5 ff) Decacyclen werden in 10 g RTV-1 Silikonkautschuk (Elastosil E41, Wacker Chemie, BRD) gelöst ; von der so hergestellten Lösung wird mit Hilfe einer Ausstreichvorrichtung eine Schicht in einer Stärke von etwa 20 μm auf ein entfettetes Glasplättchen aufgebracht.

Nach dem Aushärten der indikatorhältigen Siliconschicht wird ebenfalls mit Hilfe einer Ausstreichvorrichtung ein gleichmäßig verrührtes Gemisch von 10 Gewichtsteilen RTV-1 Silikonkautschuk (Elastosil E 43, Wacker Chemie, BRD) und 2 Gewichtsteilen Eisenoxidpigment in einer Schichtdicke von 20 μm auf die vulkanisierte indikatorhältige Schicht aufgetragen.

Nach Beendigung des Vulkanisationsvorganges ist das Sensorelement einsatzbereit.

b) Die Herstellung einer indikatorhältigen Schicht erfolgt vorerst entsprechend a).

Nach dem Aufbringen der indikatorhältigen Siliconschicht auf den Glasträger wird diese mit einem schwarzen Siebdrucknetz (Fadendurchmesser = 30 μm, offene Fläche = 46 Prozent) abgedeckt, welches auf die Siliconfläche aufgepreßt wird. Nach dem Vulkanisationsvorgang ist das Sensorelement einsatzbereit.

**Patentansprüche**

1. Sensorelement zur Bestimmung des $O_2$-Gehaltes einer Probe, mit einem $O_2$-abhängig fluoreszierenden Indikator, der mit der zu messenden Probe zumindest teilweise in Kontakt bringbar ist und nach Anregung Fluoreszenzlicht abgibt, wobei die Indikatorsubstanz zumindest annähernd homogen verteilt in einem Polymerträger eingebaut vorliegt, dadurch gekennzeichnet, daß der Träger von einem ausgehärteten Siliconpolymer gebildet ist, in dem die Indikatorsubstanz in solubilisierter Form gebunden vorliegt.

2. Sensorelement nach Anspruch 1, dadurch gekennzeichnet, daß an der der Probe zugewandten Seite des Polymerträgers eine zusätzliche Polymerschicht mit geringer Lichtdurchlässigkeit, beispielsweise Silicon mit eingelagerten Eisenoxid-Partikeln, aufgebracht ist.

3. Sensorelement nach Anspruch 1, dadurch gekennzeichnet, daß an der der Probe zugewandten Seite des Polymerträgers ein dünnes Maschengitter, insbesonders aus Metall oder Kunststoff, miteinpolymerisiert ist.

4. Sensorelement nach einem der Ansprüche 1 bis 3, dadurch gekennzeichnet, daß polyzyklische, homo- oder heterozyklische aromatische Moleküle, vorzugsweise polyzyklische aromatische Kohlenwasserstoffe mit Fluoreszenzabklingzeit $\tau_0$ größer als 5 ns, als Indikator verwendet sind.

5. Sensorelement nach einem der Ansprüche 1 bis 4, dadurch gekennzeichnet, daß im indikatorhältigen Polymerträger zusätzlich Pigmentpartikeln eingelagert sind, beispielsweise Eisenoxidpartikeln.

6. Sensorelement nach Anspruch 5, dadurch gekennzeichnet, daß die Pigmentpartikeln durch Einwirkung äußerer Kraftfelder — beispielsweise Gravitationsfeld, elektrisches Feld oder Magnetfeld — während des Aushärtungsprozesses an der der Probe zugekehrten Seite des Polymeträgers angereichert vorliegen.

7. Sensorelement nach einem der Ansprüche 1 bis 6, dadurch gekennzeichnet, daß die Indikatorsubstanz zur Immobilisierung in chemisch modifizierter Form vorliegt, vorzugsweise mit längeren verzweigten oder unverzweigten Kohlenwasserstoffketten von $C_3$ bis $C_{20}$ alkyliert, wodurch die Indikatorbeweglichkeit im Polymermaterial eingeschränkt ist.

8. Verfahren zur Herstellung eines Sensorelementes nach einem der Ansprüche 1 bis 7, wobei Indikatorsubstanz in ein nach Aushärtung den Träger bildendes Polymergemisch eingebracht wird, dadurch gekennzeichnet, daß die Löslichkeit der Indikatorsubstanz im Polymergemisch vor dem Einbau durch chemische Solubilisierung erhöht wird.

9. Verfahren nach Anspruch 8, gekennzeichnet durch folgende Schritte : Zunächst werden Indikatorsubstanz und tert. Butylchlorid in einem Lösungsmittel, z. B. $CS_2$, gelöst, bzw. wird die Indikatorsubstanz in einem Überschuß von tert. Butylchlorid ohne Zusatz eines weiteren Lösungsmittels gelöst, diese Lösung wird sodann unter dem katalytischen Einfluß von Aluminiumchlorid umgesetzt und anschließend gewaschen und getrocknet ; das überschüssige Lösungsmittel wird durch Rotationsverdampfen entfernt ; der als ölartiger Rückstand verbleibende solubilisierte Indikator wird in das vorbereitete Polymergemisch eingebracht ; das mit solubilisiertem Indikator beladene Polymergemisch wird in geeignete Form, z. B. Membranform, gebracht und aushärten gelassen.

**Claims**

1. A sensor element for determining the $O_2$ content of a sample, comprising an indicator fluorescing with the amount of $O_2$ acting upon it, which may be brought into contact with the sample at least partially and which will give off fluorescent light upon excitation, — the indicator substance being incorporated in a polymer carrier in at least approximately homogenous distribution —, wherein a cured silicone polymer is used as carrier material, to which the said indicator substance is added in solubilized form.

2. A sensor element according to claim 1, wherein an additional layer of polymer of low transparency is applied on the side of the polymer carrier facing the sample, e. g. a silicone coating containing particles of ferrous oxide.

3. A sensor element according to claim 1, wherein a thin mesh screen of metal or plastic is incorporated during polymerisation on the side of the polymer carrier facing the sample.

4. A sensor element according to any of claims 1-3, wherein polycyclic, homocyclic or heterocyclic aromatic molecules — preferably polycyclic aromatic hydrocarbons with a fluorescent decay time of $\tau_0$ greater than 5 ns — are used as indicator substances.

5. A sensor element according to any of claims 1-4, wherein the polymer carrier containing the indicator substance is additionally provided with pigments, e. g. particles of ferrous oxide.

6. A sensor element according to claim 5, wherein the said pigment particles will be accumulated on the side of the polymer carrier facing the sample due to the influence of external fields of force, such as gravitational, electric or magnetic fields, during the curing process.

7. A sensor element according to any of claims 1-6, wherein for the purpose of immobilization the indicator substance is supplied in chemically modified form, preferably alkylated with longer hydrocarbon chains, branched or unbranched (from $C_3$ to $C_2$), such that indicator mobility in the polymer material is reduced.

8. A method of preparing a sensor element according to any of claims 1-7, with an indicator substance being incorporated in a polymer mixture serving as a carrier upon curing, wherein solubility of the indicator substance in the said polymer mixture is increased by chemical solubilization prior to its being incorporated.

9. A method according to claim 8, wherein the following steps are taken : First of all, the indicator substance and tertiary butyl chloride are dissolved in a solvent, e. g. $CS_2$, or rather, the indicator substance is dissolved in an excess of tertiary butyl chloride without addition of another solvent. This solution is then reacted, with the use of aluminium chloride as a catalyst, and subsequently washed and dried. The excessive solvent is removed by rotary evaporation, and the solubilized indicator substance remaining as an oily residue is incorporated into the polymer mixture prepared. Finally, the polymer mixture filled with the solubilized indicator substance is moulded (e. g. into membranes) and cured.

**Revendications**

1. Elément détecteur pour la détermination de la teneur en oxygène d'un échantillon, comportant un indicateur fluorescent en dépendance avec la présence d'oxygène, que l'on peut mettre, au moins partiellement, en contact avec l'échantillon, et qui émet une lumière fluorescente après excitation, la substance constituant l'indicateur étant incorporée d'une façon à peu près homogène, dans un polymère porteur, élément caractérisé en ce que le polymère porteur est formé par un silicone polymère durci dans lequel la substance de l'indicateur est liée sous forme solubilisée.

2. Elément sensible suivant la revendication 1, caractérisé en ce que sur la face du polymère porteur qui est tournée vers l'échantillon, est appliquée une couche supplémentaire d'un polymère possédant une translucidité à la lumière plus réduite, par exemple un silicone avec incorporation de particules d'oxyde de fer.

3. Elément sensible suivant la revendication 1, caractérisé en ce que, dans la face du polymère porteur qui est tournée vers l'échantillon, est incorporée au cours de la polymérisation une mince grille à mailles, constituée notamment de métal ou de matière plastique.

4. Elément sensible suivant l'une quelconque des revendications 1 à 3, caractérisé en ce que l'on utilise, comme indicateur, des molécules aromatiques polycycliques, homo ou hétérocycliques, par exemple des hydrocarbures aromatiques polycycliques ayant un temps d'extinction de la fluorescence ($\tau_0$) supérieur à 5 nanosecondes.

5. Elément sensible suivant l'une quelconque des revendications 1 à 4, caractérisé en ce que, dans le polymère porteur contenant l'indicateur, on insère des particules de pigment supplémentaires, par exemple d'oxyde de fer.

6. Elément sensible suivant la revendication 5, caractérisé en ce que la face du polymère porteur qui est tournée vers l'échantillon est enrichie en particules de pigment, au cours du durcissement, par l'action de champs de force extérieurs, par exemple champ de gravitation, champ électrique ou champ magnétique.

7. Elément sensible suivant l'une quelconque des revendications 1 à 6, caractérisé en ce que la substance de l'indicateur, en vue de son immobilisation, se présente sous une forme chimiquement modifiée, par exemple alcoylée avec des chaînes d'hydrocarbure en $C_3$ à $C_{20}$ ce qui limite la mobilité de l'indicateur dans la matière polymère.

8. Procédé pour la fabrication d'un élément sensible conforme à l'une quelconque des revendications 1 à 7, dans lequel l'indicateur est introduit dans un mélange polymère formant le matériau porteur, après durcissement, procédé caractérisé en ce que la solubilité de la substance de l'indicateur dans le mélange polymère est accrue, avant son introduction, par une solubilisation chimique.

9. Procédé suivant la revendication 8, caractérisé par les étapes suivantes : tout d'abord la substance de l'indicateur est dissoute, avec du chlorure de tert-butyle, dans un solvant, par exemple $CS_2$, où la substance est dissoute dans un excès de chlorure de tert-butyle sans addition d'un autre solvant — cette solution réagissant ensuite sous l'influence catalytique de chlorure d'aluminium, puis étant lavée et séchée — l'excès de solvant est éliminé par évaporation sous rotation — l'indicateur solubilisé sous la forme d'un résidu huileux est ensuite introduit dans le mélange de polymère préalablement préparé — le mélange de polymère chargé avec l'indicateur solubilisé est finalement amené dans un moule approprié, par exemple un moule de membrane et on le laisse durcir.